# EUROPÄISCHE PATENTSCHRIFT

(11) **EP 3 376 087 B1**
(45) Veröffentlichungstag und Bekanntmachung des Hinweises auf die Patenterteilung: **23.10.2019**
(21) Anmeldenummer: 18162068.3
(22) Anmeldetag: 15.03.2018
(51) Int. Cl.: F16L 41/14, E03F 3/04

(54) **VERSCHRAUBBARER ABZWEIG FÜR EIN UNEBENHEITEN AUFWEISENDES KANALROHR**
THREADED BRANCH FOR SEWER PIPE WITH IRREGULARITIES
BRANCHEMENT VISSABLE POUR UN TUBE DE CANALISATION COMPORTANT DES IRRÉGULARITÉS

(30) Priorität: 15.03.2017 DE 202017101503 U
(43) Veröffentlichungstag der Anmeldung: 19.09.2018
(73) Patentinhaber: Funke Kunststoffe GmbH, 59071 Hamm-Uentrop (DE)
(72) Erfinder: Funke, Hans-Günter, 48324 Sendenhorst (DE); Funke, Norbert, 48324 Sendenhorst (DE)
(74) Vertreter: Habbel, Ludwig

(56) Entgegenhaltungen:
- EP-A1- 0 603 775
- DE-A1- 19 756 025
- DE-A1- 19 927 591

## Beschreibung

Die Erfindung betrifft eine Anschlussvorrichtung nach dem Oberbegriff des Anspruchs 1.

Aus der DE 199 27 591 A1 ist eine Anschlussvorrichtung bekannt, die den am nächsten kommenden Stand der Technik bildet.

Derartige Anschlussvorrichtungen haben sich in der Praxis hervorragend zum dauerhaft dichten Anschluss von Seitenrohren an Hauptrohre unterschiedlicher Wandstärken bewährt. Beispielsweise kann auf diese Weise bei der Erschließung neuer Baugebiete der Anschluss von Hausleitungen an eine bestehende Kanalisation erfolgen.

Die dabei vorgefundenen Hauptrohre, an welche ein Seitenrohr angeschlossen werden soll, bestehen in vielen Fällen aus Steinzeug oder aus Beton. Teilweise sind zur Sanierung des Hauptrohrs bereits zusätzliche so genannte Inliner in das Hauptrohr eingebracht worden. Jedenfalls ist in der Praxis häufig festzustellen, dass die innere Rohroberfläche des Hauptrohrs uneben ist. Auch bei Hauptrohren aus Kunststoff können erhöhte Anforderungen an die Dichtheit des Nebenrohr-Anschlusses gestellt werden, beispielsweise wenn die Rohrabzweigung im Bereich drückenden Grundwassers liegt.

Der Erfindung liegt die Aufgabe zugrunde, eine gattungsgemäße Anschlussvorrichtung dahingehend zu verbessern, dass diese einen zuverlässig dichten Anschluss auch an solche Hauptrohre ermöglicht, deren innere Rohroberfläche uneben verläuft.

Diese Aufgabe wird durch eine Anschlussvorrichtung mit den Merkmalen des Anspruchs 1 gelöst. Vorteilhafte Ausgestaltungen sind in den Unteransprüchen beschrieben.

Die Erfindung schlägt mit anderen Worten vor, auf dem Kragen, welcher von innen dem Hauptrohr angelegt wird, eine Dichtung anzuordnen, die sich radial nach außen, also zum zweiten Ende der Anschlussvorrichtung hinweisend, wenigstens 3 mm weit erstreckt und zwar dort, wo diese Dichtung dem Hauptrohr von innen angelegt wird. Die Dichtung kann durchgehend, also in sämtlichen Bereichen bzw. Abschnitten, die Materialstärke von 3 mm oder mehr aufweisen. Wenn sie jedoch unterschiedlich ausgestaltete Abschnitte aufweist, beispielsweise in an sich bekannter Ausgestaltung einen L-förmigen Querschnitt aufweist, so ist der wenigstens 3 mm starken Abschnitt so angeordnet, dass die Dichtung mit diesem Abschnitt der Inneren Oberfläche des Hauptrohrs anliegt und die dort eventuell vorhandenen Unebenheiten auszugleichen vermag. Vorteilhaft kann dies der radial äußere Bereich der Dichtung sein, welcher vom radial inneren Ende der umlaufenden Dichtung möglichst weit beabstandet ist. Hierdurch wird sichergestellt, dass auch dann, wenn der Kragen nicht präzise zentriert in der Radialbohrung ausgerichtet ist, die Dichtung mit ihrem 3 mm starken Abschnitt zuverlässig dem Hauptrohr anliegt, wenn anschließend der Grundkörper mittels des Spannrings am Hauptrohr festgelegt wird.

Vorschlagsgemäß ist weiterhin vorgesehen, dass der Distanzring mit einem gewissen Abstand zum Hauptrohr verläuft. Auch der daran anschließende Bereich des Distanzrings, der zirkumferent außen um den Grundkörper umläuft, kann vorteilhaft derart bemessen sein, dass sich ein Abstand zwischen dem Distanzring und dem Grundkörper ergibt. Auf diese Weise wird ein zusammenhängender Hohlraum geschaffen, der einerseits an das Hauptrohr angrenzt und andererseits um den Grundkörper herum verläuft. Zudem ist bei einer zentrischen Anordnung der Anschlussvorrichtung in der Radialbohrung ein Spalt, um den Grundkörper herum verlaufend dort vorgesehen, wo die Radialbohrung die Wand des Hauptrohrs durchsetzt, so dass der erwähnte Hohlraum nicht nur radial außen am Hauptrohr entlang verläuft, sondern sich auch entlang der Wandstärke des Hauptrohrs nach innen erstreckt, in Richtung zum ersten Ende der Anschlussvorrichtung hin.

Dieser Hohlraum kann zu Gunsten einer besonders zuverlässigen Abdichtungswirkung mit einer fließfähigen Dichtungsmasse befüllt werden, nachdem die Anschlussvorrichtung montiert worden ist, also die einzelnen Bestandteile der Anschlussvorrichtung ihre gewünschte und endgültige Position eingenommen haben. Hierzu ist vorschlagsgemäß vorgesehen, dass im Distanzring zwei gegenüberliegende Bohrungen vorgesehen sind. Durch die eine Bohrung kann die Dichtungsmasse in den Hohlraum eingefüllt werden. Dabei ermöglicht die gegenüberliegende Bohrung, dass Luft aus dem Hohlraum entweichen kann. Zudem ermöglicht diese gegenüberliegende Bohrung eine Kontrolle, ob sich die Dichtungsmasse von der Einfüllöffnung bis zur gegenüberliegenden Seite des Distanzrings verteilt hat, indem nämlich die eingefüllte Dichtungsmasse an dieser gegenüberliegenden Bohrung, die auch als Kontrollbohrung bezeichnet werden kann, sichtbar wird.

Eine Flanschfläche des Distanzrings liegt dem Hauptrohr außen an oder ist zumindest dem Hauptrohr benachbart. Zwischen der Flanschfläche und der Außenseite des Hauptrohrs ist eine Weichdichtung angeordnet, welche den Hohlraum nach außen hin abdichtet und den Austritt der Dichtungsmasse verhindert. Dort, wo der Distanzring mit dem Spannring verschraubt ist, kann die Verschraubung selbst als Dichtung wirken und den Austritt der Dichtungsmasse aus dem Hohlraum verhindern. Es kann jedoch auch vorgesehen sein, in diesem Bereich eine zusätzliche Dichtung anzuordnen, die als Hohlraumdichtung bezeichnet wird. Sie kann beispielsweise aus einem Elastomerwerkstoff bestehen und dient dazu, den dichten Abschluss des Hohlraums sicherzustellen. Diese Hohlraumdichtung kann beispielsweise so angeordnet sein, dass die Verschraubung außerhalb des abgedichteten Bereichs liegt. Sie kann jedoch auch so angeordnet sein, dass die Verschraubung innerhalb des abgedichteten Bereichs liegt, so dass die Hohlraumdichtung nicht in vollem Maße dem Druck ausgesetzt ist, der innerhalb des Hohlraums herrscht, wenn die Dichtungsmasse eingefüllt wird.

Vorteilhaft kann der 3 mm starke Dichtungsabschnitt aus einem Elastomerwerkstoff bestehen, so dass einerseits eine gute Abdichtungswirkung sichergestellt ist und andererseits auch eine hervorragende Stabilität beispielsweise gegenüber mechanischen Belastungen.

Vorteilhaft können die beiden Bohrungen, die von außen zu dem Hohlraum führen, unterschiedlich groß bemessen sein: Die Einfüllöffnung weist zum schnellen Befüllen vorteilhaft einen vergleichsweise größeren Durchmesser auf, während die Kontrollbohrung einen im Vergleich zur Einfüllöffnung geringeren Durchmesser aufweist, um den unerwünschten Austritt von Dichtungsmasse zu vermeiden. In Anpassung an die Viskosität der zu verwendenden Dichtungsmasse können diese beiden Bohrungsdurchmesser gewählt werden, so dass die Kontrollbohrung einerseits eine problemlose Entlüftung des Hohlraums sicherstellt, andererseits aber, wenn die Dichtungsmasse an die Kontrollbohrung gerät, einen übermäßig starken, unerwünschten Austritt der Dichtungsmasse verhindert.

Vorteilhaft kann vorgesehen sein, dass einerseits die Flanschfläche einen abgewinkelten, dem Hauptrohr anliegenden Abschnitt aufweist und radial innerhalb von diesem Abschnitt der der Flanschfläche die erwähnte Weichdichtung angeordnet ist. Auf diese Weise bildet das vergleichsweise härtere Material, aus dem der Distanzring, dessen Flanschfläche und deren zum Hauptrohr abgewinkelter Abschnitt besteht, einen mechanischen Schutz für die innerhalb von diesem Abschnitt angeordnete Weichdichtung, so dass beispielsweise Beschädigungen der Weichdichtung vor und während der Montage der Anschlussvorrichtung möglichst vermieden werden.

Bei dieser Ausgestaltung kann vorteilhaft vorgesehen sein, dass sich der abgewinkelte Abschnitt der Flanschfläche weniger weit in Richtung zum ersten Ende erstreckt als die Weichdichtung. In Bezug auf das Hauptrohr gesehen, ragt die Weichdichtung also über diesen Abschnitt der Flanschfläche hinaus. Hierdurch wird einerseits sichergestellt, dass die Weichdichtung beim Verspannen der Anschlussvorrichtung mittels des Spannrings komprimiert werden kann und damit eine optimale Dichtungswirkung aufweist, indem die Weichdichtung nämlich komprimiert werden kann, bis der außen umlaufende Abschnitt der Flanschfläche auf der Außenseite des Hauptrohrs aufsetzt. Weiterhin wird durch diese Ausgestaltung sichergestellt, dass die Weichdichtung nicht über ein zuträgliches Maß hinaus komprimiert wird, so dass der zum Hauptrohr hin abgewinkelte Abschnitt der Flanschfläche als eine Art Abstandshalter wirkt, welche somit auch eine MindestSpaltgröße innerhalb des mit der Dichtungsmasse zu befüllenden Hohlraums sicherstellt. Durch diese Mindestspaltgröße ist gewährleistet, dass die vergleichsweise viskose, z. B. honigartig fließfähige Dichtungsmasse zuverlässig sich im gesamten Hohlraum verteilen kann und die gewünschte Dichtungswirkung entfalten kann.

Vorteilhaft kann der Anschlussabschnitt der Anschlussvorrichtung, der an das Seitenrohr anschließt, in einem separaten Anschlussbauteil angeordnet sein, welches mit dem Grundkörper verbunden ist. Auf diese Weise wird ein modularer Aufbau der Anschlussvorrichtung geschaffen, der mit möglichst geringem wirtschaftlichem Aufwand für eine möglichst große Anzahl unterschiedlicher Anwendungsfälle geeignet ist. Beispielsweise können unterschiedliche Anschlussabschnitte vorgesehen sein, die wahlweise an den Grundkörper angeschlossen werden können und die beispielsweise unterschiedliche Durchmesser aufweisen und somit an den Durchmesser der jeweils anzuschließenden Seitenrohre angepasst werden können.

Auch kann vorgesehen sein, dass das Anschlussbauteil als Winkelstück ausgestaltet ist, welches entweder in einem vorbestimmten Winkel den Anschluss des Seitenrohrs ermöglicht, oder welches kugelgelenkartig eine Vielzahl unterschiedlicher Winkelstellungen einnehmen kann und somit auch Setzungen oder ähnliche Bewegungen des Seitenrohrs in Bezug auf das Hauptrohr auszugleichen vermag.

Ein Ausführungsbeispiel der Erfindung wird anhand der rein schematischen Darstellung nachfolgend näher erläutert.

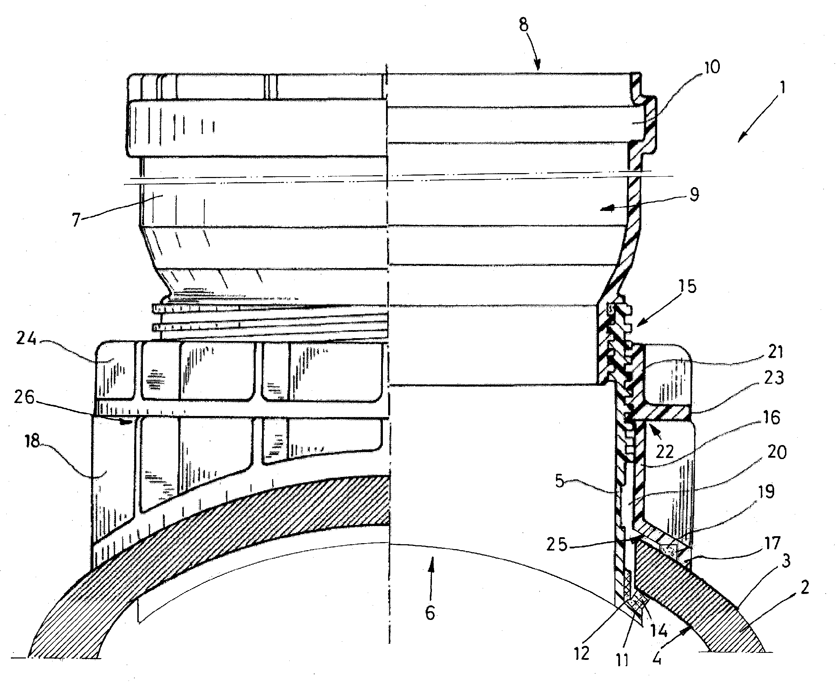

In der Zeichnung ist mit 1 insgesamt eine Anschlussvorrichtung bezeichnet, die den Anschluss eines in der Zeichnung nicht dargestellten Seitenrohres an ein Hauptrohr 2 ermöglicht. Das Hauptrohr 2 weist beim dargestellten Ausführungsbeispiel eine Außenseite 3 und eine innere Oberfläche 4 auf.

In das Hauptrohr 2 ist eine Radialbohrung eingebracht worden, und in diese Radialbohrung ist ein Grundkörper 5 der Anschlussvorrichtung eingesetzt worden. Der Grundkörper 5 ist im Wesentlichen zylindrisch ausgestaltet und bildet ein erstes in das Hauptrohr 2 eingeführtes Ende 6. In den Grundkörper 5 eingeschraubt ist ein Anschlussbauteil 7, welches ein zweites Ende 8 der Anschlussvorrichtung 1 bildet. Das Anschlussbauteil 7 weist abgesehen von dem Gewinde, welches zur Verschraubung mit dem Grundkörper 5 dient, einen Anschlussabschnitt 9 auf, der als Muffenende ausgestaltet ist, eine innere Nut 10 zur Aufnahme einer Dichtung aufweist und als Muffe zur Aufnahme eines Spitzendes des Seitenrohrs dient.

Zur Montage der Anschlussvorrichtung 1 wird zunächst die Radialbohrung in das Hauptrohr 2 eingebracht. Anschließend wird der Grundkörper 5 elastisch verformt, so dass das erste Ende 6 durch die Radialbohrung in das Innere des Hauptrohrs 2 eingebracht werden kann. Anschließend stellt sich der elastische, aus Kunststoff bestehende Grundkörper 5 in seine ursprüngliche Form zurück. Ein am ersten Ende 6 außen umlaufender Kragen 11 des Grundkörpers 5 weist einen größeren Durchmesser auf als die Radialbohrung, so dass der Grundkörper 5 nun formschlüssig innerhalb des Hauptrohrs 2 gehalten ist. Auf dem Kragen 11, zum zweiten Ende 8 hin weisend, ist eine Dichtung 12 angeordnet und diese weist in ihrem radial äußeren Bereich, nämlich dort, wo sie der inneren Oberfläche 4 des Hauptrohrs 2 anliegt, einen Abschnitt 14 auf, der wenigstens 3 mm stark ist, sich also wenigstens 3 mm weit in Richtung zum zweiten Ende 8 hin vom Kragen 11 aus erstreckt. Dieser Abschnitt 14 sowie die Gesamtdichtung 12 bestehen aus einem Elastomerwerkstoff.

Abgesehen von seinem Innengewinde zur Verschraubung mit dem Anschlussbauteil 7 weist der Grundkörper 5 auch ein Außengewinde 15 auf. Außerhalb des Außengewindes 15 und nicht mit diesem zusammenwirkend ist ein Distanzring 16 vorgesehen, welcher an seiner zum ersten Ende 6 weisenden Unterseite wellenförmig verläuft in Anpassung an den Krümmungsradius, der Außenseite 3 des Hauptrohrs 2. Radial außen und zum ersten Ende 6 hin weisend weist der Distanzring 16 eine Flanschfläche 17 auf, mit welcher er der Außenseite 3 des Hauptrohrs 2 anliegt. Bei dem dargestellten Ausführungsbeispiel weist die Flanschfläche 17 entlang ihrem äußeren, umlaufenden Rand einen Abschnitt auf, der zum Hauptrohr 2 hin abgewinkelt ist. Weiterhin weist der Distanzring 16 nach außen ragende Aussteifungsrippen 18 auf, die der Aussteifung und mechanischen Verstärkung des Distanzrings 16 dienen.

Radial innerhalb von dem äußeren, abgewinkelten Abschnitt der Flanschfläche 17 verläuft eine Weichdichtung 19, die beispielsweise als Moosgummidichtung ausgestaltet sein kann. Diese Weichdichtung 19 erstreckt sich im unkomprimierten Zustand über die Flanschfläche 17 hinaus in Richtung zum ersten Ende 6. Bei dem dargestellten Ausführungsbeispiel ist die Anschlussvorrichtung 1 fertig montiert und die Weichdichtung 19 so weit komprimiert, dass die Flanschfläche 17 des Distanzrings 16 mit ihrem äußeren, abgewinkelten Abschnitt auf der Außenseite 3 des Hauptrohrs 2 aufliegt.

Alternativ zu dem dargestellten Ausführungsbeispiel kann vorgesehen sein, auf den zum Hauptrohr 2 hin abgewinkelten Abschnitt der Flanschfläche 17 zu verzichten. Nachdem der Distanzring 16 an das Hauptrohr 2 angepresst worden ist, wie nachfolgend noch erläutert wird, bewirkt die dann komprimierte Weichdichtung 19 mit ihrer verbleibenden, komprimierten Materialstärke einen Abstand zwischen der Außenseite 3 des Hauptrohrs 2 und dem Distanzring 16, insbesondere zu dessen Flanschfläche 17.In beiden vorbeschriebenen Fällen wirkt entweder der abgewinkelte Abschnitt der Flanschfläche 17 oder die Weichdichtung 19 als Abstandshalter in der Art, dass sich ein Hohlraum 20 ergibt, der von dem Hauptrohr 2, dem Kragen 11 und dessen Dichtung 12, vom Grundkörper 5 und vom Distanzring 16 begrenzt ist.

Nach oben hin, zum zweiten Ende 8 weisend, wird dieser Hohlraum 20 durch einen Spannring 21 dicht abgeschlossen, der einer Druckfläche 22 des Distanzrings 16 anliegt, nämlich mit einer radial nach außen ragenden, ringsum laufenden Spannfläche 23. Die Druckfläche 22 des Distanzrings 16 wird einerseits gebildet durch die Oberkanten der Aussteifungsrippen 18 und andererseits durch die Oberkante des rohrförmigen Abschnitts des Distanzrings 16.

Der Spannring 21 weist ebenfalls nach außen ragende Rippen auf, die allerdings als Schraubrippen 24 dazu dienen, den Spannring 21 betätigen und auf dem Außengewinde 15 verschrauben zu können und dabei den Distanzring 16 an das Hauptrohr 2 zu pressen.

Zwischen dem rohrförmigen Abschnitt und dem zum Hauptrohr 2 abgewinkelten Abschnitt des Distanzrings 16 ist in der Zeichnung eine Kontrollbohrung 25 in der Flanschfläche 17 ersichtlich. Der Kontrollbohrung 25 gegenüberliegend und vom ersten Ende 6 weiter beabstandet ist eine in der Zeichnung lediglich durch einen Pfeil angedeutete Einfüllöffnung 26 vorgesehen, deren Durchmesser größer ist als derjenige der Kontrollbohrung 25.

Beim Einfüllen einer fließfähigen Dichtungsmasse in die Einfüllöffnung 26 fließt diese zunächst nach unten zum tiefsten Punkt des Hohlraums 20 unterhalb der Einfüllöffnung 26. Anschließend verteilt sich diese Dichtungsmasse rings um den Grundkörper 5 innerhalb des Hohlraums 20, wobei während dieses Einfüllvorgangs Luft aus dem Hohlraum 20 durch die Kontrollbohrung 25 entweichen kann. Schließlich wird die Dichtungsmasse an der Kontrollbohrung 25 sichtbar. Insbesondere, wenn die Dichtungsmasse mit einem ausreichend hohen Druck in den Hohlraum 20 eingefüllt wird, kann auch Dichtungsmasse aus der Kontrollbohrung 25 austreten, so dass auf diese Weise die ausreichende Befüllung des Hohlraums 20 mit Dichtungsmasse angezeigt wird. Wird nun der Einfülldruck reduziert, so wird der Austritt von Dichtungsmasse aus der Kontrollbohrung 25 auf ein unkritisches Maß begrenzt oder vollständig verhindert.

Zudem kann bei Bedarf die Kontrollbohrung 25 durch einen aufgeklebten oder in die Kontrollbohrung 25 eingesteckten Verschluss verschlossen werden, so dass weitere Verluste von Dichtungsmasse zuverlässig vermieden werden, bis die Dichtungsmasse ausreichend weit vernetzt bzw. ausgehärtet ist.

Bei dem dargestellten Ausführungsbeispiel ist die Anschlussvorrichtung 1 an ein Hauptrohr 2 aus Steinzeug oder Beton angeschlossen, welches keinen Inliner aufweist. Falls die Anschlussvorrichtung 1 an ein Hauptrohr 2 mit Inliner angeschlossen werden soll, kann die Anschlussvorrichtung 1 gegebenenfalls die kombinierte Wandstärke des Hauptrohrs 2 und des Inliners umgreifen. Es kann alternativ jedoch auch vorgesehen sein, in das Steinzeug- oder Betonmaterial des Hauptrohrs 2 ein so großes Fenster einzuschneiden, dass darin der Distanzring 16 mitsamt der Flanschfläche 17 aufgenommen werden kann. Eine im Vergleich zu diesem Fenster kleinere Öffnung wird in den Inliner eingebracht, so dass die in der Zeichnung dargestellte Anordnung in der Art verwirklicht wird, dass der Inliner das in der Zeichnung dargestellte Hauptrohr 2 bildet, und dass radial außerhalb davon das Steinzeug- oder Betonmaterial den Außenmantel eines solchen zweischichtigen Hauptrohrs bildet.

### Bezugszeichen:

- 1: Anschlussvorrichtung
- 2: Hauptrohr
- 3: Außenseite
- 4: Innere Oberfläche
- 5: Grundkörper
- 6: Erstes Ende
- 7: Anschlussbauteil
- 8: Zweites Ende
- 9: Anschlussabschnitt
- 10: Innere Nut
- 11: Kragen
- 12: Dichtung
- 14: Abschnitt
- 15: Außengewinde
- 16: Distanzring
- 17: Flanschfläche
- 18: Aussteifungsrippe
- 19: Weichdichtung
- 20: Hohlraum
- 21: Spannring
- 22: Druckfläche
- 23: Spannfläche
- 24: Schraubrippen
- 25: Kontrollbohrung
- 26: Einfüllöffnung

## Patentansprüche

1. Anschlussvorrichtung (1) zur Verbindung eines mit einer Radialbohrung versehenen Hauptrohrs (2) mit einem Seitenrohr,
• mit einem ersten, durch die Radialbohrung in das Hauptrohr (2) einführbaren Ende (6),
wobei die Anschlussvorrichtung (1) im Bereich ihres ersten Endes (6) einen dem Hauptrohr (2) von innen anlegbaren, sich radial nach außen erstreckenden Kragen (11) aufweist,
• mit einem zweiten, an das Seitenrohr anschließbaren Ende (8),
wobei die Anschlussvorrichtung (1) im Bereich ihres zweiten Endes (8) einen Anschlussabschnitt (9) aufweist, der an das Seitenrohr anschließbar ausgestaltet ist,
• und wobei der Kragen (11) mit einer elastischen Dichtung (12) versehen ist, die sich vom Kragen (11) in Richtung zum zweiten Ende (8) erstreckt,
• mit einem als Rohrabschnitt ausgestalteten Grundkörper (5),
• mit einem den Grundkörper (5) im Anwendungsfall außerhalb des Hauptrohrs (2) umgebenden Distanzring,
welcher in Richtung zum ersten Ende (6) weisend eine wellenförmig verlaufende, der Außenseite des Hauptrohrs (2) folgende Flanschfläche (17) aufweist, sowie in Richtung zum zweiten Ende (8) weisend eine quer zum Grundkörper (5) verlaufende Druckfläche (22),
• und mit einem Spannring (21), welcher den Grundkörper (5) umgibt und mit diesem verschraubbar ist,
und welcher in Richtung zum zweiten Ende (8) weisend eine an die Druckfläche (22) des Distanzrings (16) anlegbare Spannfläche (23) aufweist wobei der Distanzring (16) derart geformt ist, dass zwischen dem Distanzring (16) einerseits und dem Grundkörper (5) sowie dem Hauptrohr (2) andererseits ein mit einer fließfähigen Dichtungsmasse befüllbarer Hohlraum (20) geschaffen werden kann, welcher an den Grundkörper (5) und das Hauptrohr (2) angrenzt, und wobei auf der zum ersten Ende (6) hin weisenden Seite der Flanschfläche (17) eine den Hohlraum (20) begrenzende Weichdichtung (19) angeordnet ist,
**dadurch gekennzeichnet, dass**
• die am Kragen (11) befindliche Dichtung (12) einen an der inneren Oberfläche (4) des Hauptrohrs (2) anlegbaren Abschnitt (14) aufweist, welcher sich wenigstens 3 mm weit in Richtung zum zweiten Ende (8) erstreckt, und
• der Distanzring (16) zwei gegenüberliegende, in den Hohlraum (20) mündende Bohrungen (25, 26) aufweist,
die in axialer Richtung des Grundkörpers (5) unterschiedlich weit vom ersten Ende (6) angeordnet sind.

2. Anschlussvorrichtung nach Anspruch 1,
**dadurch gekennzeichnet,**
**dass** der Abschnitt (14) aus einem Elastomerwerkstoff besteht.

3. Anschlussvorrichtung nach Anspruch 1 oder 2,
**dadurch gekennzeichnet,**
**dass** die dem ersten Ende (6) nähere, als Kontrollbohrung (25) bezeichnete Bohrung einen geringeren Durchmesser aufweist als die vom ersten Ende (6) weiter beabstandete, als Einfüllöffnung (26) bezeichnete Bohrung.

4. Anschlussvorrichtung nach einem der vorhergehenden Ansprüche,
**dadurch gekennzeichnet,**
**dass** die Flanschfläche (17) des Distanzrings (16) einen zum ersten Ende (6) hin, dem Hauptrohr (2) anlegbaren, abgewinkelten Abschnitt aufweist.

5. Anschlussvorrichtung nach Anspruch 4,
**dadurch gekennzeichnet,**
**dass** die Flanschfläche (17) sich weniger weit in Richtung zum ersten Ende (6) erstreckt als die Weichdichtung (19).

6. Anschlussvorrichtung nach einem der vorhergehenden Ansprüche,
**dadurch gekennzeichnet,**
**dass** der Anschlussabschnitt (9) als Teil eines von dem Grundkörper (5) separaten und mit dem Grundkörper (5) verbundenen Anschlussbauteils (7) ausgestaltet ist.

7. Anschlussvorrichtung nach einem der vorhergehenden Ansprüche,
**dadurch gekennzeichnet,**
**dass** in dem Bereich, wo der Distanzring (16) mit dem Spannring (21) verschraubt ist, eine den Austritt der Dichtungsmasse aus dem Hohlraum (20) verhindernde Hohlraumdichtung angeordnet ist.

8. Anschlussvorrichtung nach Anspruch 7,
**dadurch gekennzeichnet,**
**dass** die Hohlraumdichtung diesseits von der Verschraubung innerhalb des Hohlraums (20) angeordnet ist.

9. Anschlussvorrichtung nach Anspruch 7,
**dadurch gekennzeichnet,**
**dass** die Hohlraumdichtung jenseits von der Verschraubung außerhalb des Hohlraums (20) angeordnet ist.

## Claims

1. Connection assembly (1) for connecting a main pipe (2) to a side pipe, which main pipe (2) is provided with a radial hole,
• having a first end (6) that can be inserted through the radial hole into the main pipe (2), where the connection assembly (1) incorporates in the area of its first end (6) a coupling piece (11) that can be placed against the main pipe (2) from inside and extends radially outwards,
• having a second end (8) that can be attached to the side pipe, where the connection assembly (1) incorporates in the area of its second end (8) a connection section (9) that is configured for attachment to the side pipe,
• and where the coupling piece (11) is provided with an elastic seal (12) that extends from the coupling piece (11) in the direction of the second end (8),
• and having a main member (5) configured as a pipe section,
• and having a spacer ring that during use fits around the main member (5) outside the main pipe (2) and that incorporates a flange face (17) extending corrugatedly towards the first end (6) and following the outside of the main pipe (2), and a compression face (22) extending across the main member (5) and oriented towards the second end (8),
• and having a locking ring (21) that fits around the main member (5) and can be bolted to the main member (5), and which incorporates a locking face (23) that is oriented towards the second end (8) and can be placed against a compression face (22) of the spacer ring (16), where the spacer ring (16) is formed so that a cavity (20) that is adjacent to the main member (5) and the main pipe (2) and can be filled with a liquid sealing medium can be created between the spacer ring (16), on the one hand, and the main member (5) and the main pipe (2), on the other, and where a soft seal (19) delimiting the cavity (20) is disposed on the side of the flange face (17) that is oriented towards the first end (6),
**characterised in that**
• the seal (12) that is fitted against the coupling piece (11) incorporates a section (14) that can be placed against the inner surface (4) of the main pipe (2) and that extends for at least 3 mm in the direction of the second end (8), and
• the spacer ring (16) incorporates two opposing holes (25, 26) that extend into the cavity (20) and that are disposed in an axial direction of the main member (5) at different distances from the first end (6).

2. Connection assembly in accordance with claim 1, **characterised in that** the section (14) is made from an elastomer material.

3. Connection assembly in accordance with claim 1 or 2, **characterised in that** the hole that is nearer the first end (6) and is referred to as a monitoring hole (25), has a smaller diameter than the hole that is set further away from the first end (6) and is referred to as a filling hole (26).

4. Connection assembly in accordance with any one of the foregoing claims, **characterised in that** the flange face (17) on the spacer ring (16) incorporates towards the first end (6) an angled section that can be placed against the main pipe (2).

5. Connection assembly in accordance with claim 4, **characterised in that** the flange face (17) does not extend so far in the direction of the first end (6) as the soft seal (19).

6. Connection assembly in accordance with any one of the foregoing claims, **characterised in that** the connection section (9) is configured as part of a connection component part (7) that is separate from the main member (5) and is connected to the main member (5).

7. Connection assembly in accordance with any one of the foregoing claims, **characterised in that** in the area where the spacer ring (16) is bolted to the locking ring (21) a cavity seal that prevents the sealing compound from escaping from the cavity (20) is disposed.

8. Connection assembly in accordance with claim 7, **characterised in that** the cavity seal is disposed on this side of the screw connection inside the cavity (20).

9. Connection assembly in accordance with claim 7, **characterised in that** the cavity seal is disposed on the other side of the screw connection outside the cavity (20).

## Revendications

1. Dispositif de raccordement (1) pour relier un tube principal (2), muni d'un alésage radial, avec un tube latéral,
• comprenant une première extrémité (6) pouvant être introduite par l'alésage radial dans le tuyau principal (2), sachant que le dispositif de raccordement (1) dans la zone de sa première extrémité (6) présente un col (11) applicable de l'intérieur contre le tuyau principal (2) et s'étendant radialement vers l'extérieur,
• comprenant une deuxième extrémité (8) raccordable au tube latéral, sachant que le dispositif de raccordement (1) présente, dans la zone de sa deuxième extrémité (8), un segment de raccordement (9) configuré raccordable au tube latéral,
• et sachant que le col (11) est muni d'un joint (12) élastique qui s'étend du col (11) en direction de la deuxième extrémité (8),
• comprenant un corps de base (5) configuré comme segment de tube,
• comprenant une bague d'écartement qui dans le cas d'application entoure le corps de base (5) en dehors du tube principal (2), bague qui présente, en direction de la première extrémité (6) une surface (17) de bride au tracé ondulé qui suit le côté extérieur du tube principal (2), et qui présente en direction de la deuxième extrémité (8) une surface de compression (22) présentant un tracé transversal au corps de base (5),
• et comprenant une bague de serrage (21) qui entoure le corps de base (5) et peut être vissée contre lui, et qui en direction de la deuxième extrémité (8) présente une surface de serrage (23) applicable contre la surface de compression (22) de la bague d'écartement (16), sachant que la bague d'écartement (16) est moulée de telle sorte qu'entre la bague d'écartement (16) d'une part et le corps de base (5) plus le tube principal (2) d'autre part peut être créée une cavité (20) remplissable d'un mastic d'étanchéité coulant, cavité qui jouxte le corps de base (5) et le tube principal (2), et sachant que sur le côté, qui regarde vers la première extrémité (6), de la surface (17) de bride, est disposé un joint mou (19) limitant la cavité (20),
**caractérisé en ce que**
• le joint (12) situé sur le col (11) présente un segment (14) pouvant être appliqué contre la surface (4) intérieure du tube principal (2), segment qui s'étend sur au moins 3 mm en direction de la deuxième extrémité (8), et **en ce que**
• la bague d'écartement (16) présente deux alésages (25, 26) se faisant face qui débouchent dans la cavité (20), alésages qui dans le sens axial du corps de base (5) sont disposés à des distances différentes de la première extrémité (6).

2. Dispositif de raccordement selon la revendication 1, **caractérisé en ce que** le segment (14) se compose d'un matériau élastomère.

3. Dispositif de raccordement selon la revendication 1 ou 2, **caractérisé en ce que** l'alésage plus proche de la première extrémité (6), appelé alésage de contrôle (25), présente un plus petit diamètre que l'alésage plus distant de la première extrémité (6) appelé orifice de remplissage (26).

4. Dispositif de raccordement selon l'une des revendications précédentes, **caractérisé en ce que** la surface (17) de bride de la bague d'écartement (16) présente en direction de la première extrémité (6) un segment coudé applicable contre le tube principal (2).

5. Dispositif de raccordement selon la revendication 4, **caractérisé en ce que** la surface (17) de bride s'étend moins loin que le joint mou (19) en direction de la première extrémité (6).

6. Dispositif de raccordement selon l'une des revendications précédentes, **caractérisé en ce que** le segment de raccordement (9) est configuré en tant que partie d'un composant de raccordement (7) distinct du corps de base (5) et relié au corps de base (5).

7. Dispositif de raccordement selon l'une des revendications précédentes, **caractérisé en ce que** dans la zone où la bague d'écartement (16) est vissée contre la bague de serrage (21), est disposé un joint de cavité empêchant le mastic d'étanchéité de quitter la cavité (20).

8. Dispositif de raccordement selon la revendication 7, **caractérisé en ce que** le joint de cavité est disposé en-deçà du raccord vissé à l'intérieur de la cavité (20).

9. Dispositif de raccordement selon la revendication 7, **caractérisé en ce que** le joint de cavité est disposé au-delà du raccord vissé à l'extérieur de la cavité (20).
